# EUROPEAN PATENT SPECIFICATION

(11) **EP 4 349 668 B1**
(45) Date of publication and mention of the grant of the patent: **10.09.2025**
(21) Application number: 22810180.4
(22) Date of filing: 29.03.2022
(51) Int. Cl.: B60R 25/20, B60W 50/00, G07C 9/00, G08C 17/02

(54) **VEHICLE KEY SEARCHING METHOD AND DEVICE, COMPUTER-READABLE STORAGE MEDIUM, AND VEHICLE**
VERFAHREN UND VORRICHTUNG ZUR FAHRZEUGSCHLÜSSELSUCHE, COMPUTERLESBARES SPEICHERMEDIUM UND FAHRZEUG
PROCÉDÉ ET DISPOSITIF DE RECHERCHE DE CLÉ DE VÉHICULE, SUPPORT D'ENREGISTREMENT LISIBLE PAR ORDINATEUR ET VÉHICULE

(30) Priority: 24.05.2021 CN 202110568012
(43) Date of publication of application: 10.04.2024
(73) Proprietor: Great Wall Motor Company Limited, Baoding, Hebei 071000 (CN)
(72) Inventor: HUANG, Guoqing, Baoding, Hebei 071000 (CN)
(74) Representative: dompatent von Kreisler Selting Werner - Partnerschaft von Patent- und Rechtsanwälten mbB
(86) International application number: PCT/CN2022/083815
(87) International publication number: WO 2022/247447

(56) References cited:
- CN-A- 104 590 204
- CN-A- 105 984 424
- CN-A- 105 984 424
- CN-A- 107 891 841
- CN-A- 109 164 795
- CN-A- 110 789 514
- CN-A- 110 789 514
- CN-A- 112 009 422
- DE-U1- 202019 000 218
- JP-A- 2017 061 790
- KR-A- 20080 086 623
- KAMOUAA JEDIDI: "Turn-Key Passive Entry/ Passive Start Solution", AUTOMOTIVE COMPILATION VOL. 10, 9 September 2013 (2013-09-09), XP055831207, Retrieved from the Internet <URL:https://ww1.microchip.com/downloads/en/DeviceDoc/Article_AC10_Turn-Key-Passive-Entry.pdf> [retrieved on 20210810]

## Description

### TECHNICAL FIELD

The present invention relates to the technical field of vehicles, and more particularly to a method and a device for searching a vehicle key, a computer-readable storage medium and a vehicle.

### BACKGROUND

For the convenience of vehicle use, most vehicles are currently equipped with a PEPS (Passive Entry Passive Start) system. Through the PEPS system, the key can be positioned to control the door to be unlocked when the key approaches the door, and to start the vehicle with one click when the key is inside the vehicle.

The PEPS system can also receive search trigger sources sent by other modules in the vehicle, such as a power control module, an engine control module, an air conditioning control module, a welcome mode control module, etc., and trigger key searching according to the search trigger source to position the key. The search trigger sources of different modules may have different priorities based on their implementation functions. Currently, when the PEPS system receives multiple search trigger sources, it is possible to select the processing with the highest priority from them, and then re-receive other search trigger sources after the processing is completed. This requires other modules to continuously send search trigger sources, which has high power consumption pressure and requires reacquisition after each processing. The efficiency of priority determination is low, and the failure of the functional module can cause the search trigger source to be completely lost, thereby the normal function of the PEPS system is affected, the normal implementation of the key search function is affected, which may pose a safety hazard.

CN 110 789 514 A discloses a method for searching a vehicle key, which involves triggering a preliminary key search when a state change in at least one of the brake or clutch is detected. If a valid key is found, the vehicle will start in response to a one-key start command within a preset time period.

CN 107 891 841 B discloses a vehicle key search system consisting of two vehicle antennas, a starting device, and a processor. The first antenna initiates the search for the key remote to obtain identification information. If no information is received within a specific time frame, the processor switches to the second antenna, which also continues searching for the key.

CN 105 984 424 B discloses a method for key authentication in a keyless start system, including initiation of a preliminary key authentication when the first triggering condition is met, initiation of key authentication when the second triggering condition is met, and initiation of a re-authentication process when the third triggering condition is met.

### SUMMARY

In view of this, the present invention aims to propose a method and a device for searching a vehicle key, a computer-readable storage medium and a vehicle, so as to improve efficiency, reduce energy consumption, and ensure safety when implementing key search function. The invention achieves these aims through the features defined in the independent claims, with further advantageous embodiments described in the dependent claims.

In order to realize above objects, the technical solution of the present invention is realized as following:
A method for searching a vehicle key, which includes:
obtaining key search trigger sources corresponding to at least one function in a vehicle and priorities corresponding to the key search trigger sources, and each of the key search trigger sources is configured for being instructed to execute a key search corresponding to the function;
storing, in a sequence, the key search trigger sources according to the priorities; and
processing successively the key search trigger sources according to the sequence in which the key search trigger sources are stored, to perform the key search.
further the vehicle includes N key search trigger sources corresponding to N functions, and the step of storing, in a sequence, the key search trigger sources according to the priorities includes:
   constructing a first array, and the first array includes N bits of a first value;
   storing the key search trigger sources to corresponding bits in the first array according to the priorities of the key search trigger sources; and
   assigning the bits in the first array that are stored with the key search trigger sources as a second value to obtain a second array.

Further, the step of processing successively the key search trigger sources according to the sequence in which the key search trigger sources are stored includes:
processing a first target key search trigger source in the second array, and the first target key search trigger source is the key search trigger source corresponding to a first bit in the second value of the second array;
constructing a third array comprising N bits of the first value when the processing of the first target key trigger source is completed;
assigning the third array according to each of bits in the second array to obtain a fourth array, and assigning a bit of the first target key search trigger source in the fourth array as the first value; and
processing a second target key search trigger source in the fourth array, and repeating preceding steps until processing of the obtained key search trigger source is completed, wherein the second target key search trigger source is the key search trigger source corresponding to a first bit in the second value of the fourth array.

Further, after the step of assigning the bits in the first array that are stored with the key search trigger sources as the second value to obtain the second array, the method includes:
constructing a first key search trigger according to the bit of the first target key search trigger source in the second array;
after the step of assigning the third array according to each of bits in the second array to obtain the fourth array, and assigning the bit of the first target key search trigger source in the fourth array as the first value, further includes:
   updating the first key search trigger according to the bit of the first target key search trigger source in the fourth array to obtain a second key search trigger.

Further, after the step of processing successively the key search trigger sources according to the sequence in which the key search trigger sources are stored, the method further includes:
re-obtaining the key search trigger source corresponding to at least one function in the vehicle, and performing subsequent steps to process the re-obtained key search trigger source to perform key searching.

The method for searching the vehicle key disclosed herein has the following advantages over the prior art:
In the embodiments of the present invention,

In the embodiment of the present invention, when the key search trigger source corresponding to at least one function is obtained and the priorities corresponding to the key search trigger sources are obtained, the key search trigger sources can be sequentially stored according to the priorities of the key search trigger sources, and then the key search trigger sources can be sequentially processed according to the sequence of the key search trigger sources to perform the key search. After the key search trigger sources are received at this time, the key search trigger sources can be stored and processed according to the priorities, which does not require continuous sending and multiple receiving, improving the processing efficiency of the key search trigger sources and reducing power consumption. When other modules fail, the key search can be performed according to the stored key search trigger sources. The normal realization of the vehicle key search function and the safety of the vehicle are ensured.

Another object of the present invention is to propose a device for searching a vehicle key, so as to improve efficiency, reduce energy consumption, and ensure safety when implementing key search function.

In order to realize above objects, the technical solution of the present invention is realized as following:
A device for searching a vehicle key, and the device can include:
a trigger source obtaining module, configured for obtaining key search trigger sources corresponding to at least one function in a vehicle and priorities corresponding to the key search trigger sources, and each of the key search trigger sources is configured for being instructed to execute a key search corresponding to the function;
a trigger source storage module, configured for storing, in a sequence, the key search trigger sources according to the priorities; and
a trigger source processing module, configured for processing successively the key search trigger sources according to the sequence in which the key search trigger sources are stored, to perform the key search.

Further, the trigger source storage module includes:
a first array construction sub-module, configured for constructing a first array, and the first array includes N bits of a first value;
a first array storage sub-module, configured for storing the key search trigger sources to corresponding bits in the first array according to the priorities of the key search trigger sources; and
a first array assigning sub-module, configured for assigning the bits in the first array that are stored with the key search trigger sources as a second value to obtain a second array.

Further, the trigger source processing module includes:
a trigger source processing sub-module, configured for processing a first target key search trigger source in the second array, and the first target key search trigger source is the key search trigger source corresponding to a first bit in the second value of the second array;
a second array construction sub-module, configured for constructing a third array comprising N bits of the first value when the processing of the first target key trigger source is completed;
a second array assigning sub-module, configured for assigning the third array according to each of bits in the second array to obtain a fourth array, and assigning a bit of the first target key search trigger source in the fourth array as the first value; and
the trigger source processing module is further configured for processing a second target key search trigger source in the fourth array, and repeating preceding steps until processing of the obtained key search trigger source is completed, wherein the second target key search trigger source is the key search trigger source corresponding to a first bit in the second value of the fourth array.

Further, the device further includes:
a key search trigger construction module, configured for constructing a first key search trigger according to the bit of the first target key search trigger source in the second array;
a key search trigger updating module, configured for updating the first key search trigger according to the bit of the first target key search trigger source in the fourth array to obtain a second key search trigger.

Further, the trigger source obtaining module is further configured for re-obtaining the key search trigger source corresponding to at least one function in the vehicle, and performing subsequent steps to process the re-obtained key search trigger source to perform key searching.

Compared with the prior art, the advantages of the device for searching the vehicle key and the method for searching the vehicle key when compared with the prior art are the same, which will not be repeated here.

A further object of the present invention is to propose a computer-readable storage medium, which stores a computer program, and when the computer program is executed by a processor, the steps of the method for searching the vehicle key mentioned above can be implemented.

Compared with the prior art, the advantages of the computer-readable storage medium and the method for searching the vehicle key when compared with the prior art are the same, which will not be repeated here.

A yet object of the present invention is to propose a vehicle, which includes a controller; and the controller includes a memory, a processor and a computer program stored in the memory and capable of running on the processor, when the processor executes the computer program, the steps of the method for searching the vehicle key mentioned above can be implemented.

Compared with the prior art, the advantages of the vehicle and the method for searching the vehicle key when compared with the prior art are the same, which will not be repeated here.

### BRIEF DESCRIPTION OF THE DRAWINGS

The drawings forming part of the invention are used to provide a further understanding of the invention, and schematic embodiments of the invention and their descriptions are used to interpret the invention and do not constitute undue qualification of the invention. In the accompanying figures:
FIG. 1 is a flow diagram of a method for searching a vehicle key provided by an embodiment of the present invention;
FIG. 2 is a flow diagram of another method for searching a vehicle key provided by an embodiment of the present invention;
FIG. 3 is a schematic diagram of a process of assigning a second array provided by an embodiment of the present invention;
FIG. 4 is a schematic diagram of a process of constructing a first key search trigger provided by an embodiment of the present invention;
FIG. 5 is a schematic diagram of a process of processing a first target key search trigger source provided by an embodiment of the present invention;
FIG. 6 is a schematic diagram of a process of processing another first target key search trigger source provided by an embodiment of the present invention;
FIG. 7 is a schematic diagram of a process of assigning a third array provided by an embodiment of the present invention;
FIG. 8 is a schematic diagram of a process of updating a second key search trigger provided by an embodiment of the present invention;
[61] FIG. 9 is a schematic diagram of a process of processing a secondary target key search trigger source provided by an embodiment of the present invention;
[62] FIG. 10 is a structural block diagram of a device for searching a vehicle key provided by an embodiment of the present invention;
[63] FIG. 11 provides a structural block diagram of an electronic device provided by an embodiment of the present invention; and
[64] FIG. 12 is a schematic diagram of hardware structures of an electronic device provided by an embodiment of the present invention.

### DETAILED DESCRIPTION OF EMBODIMENTS

It should be noted that embodiments in the present invention and features in embodiments can be combined with each other without conflict.

The present invention is described in detail below with reference to the attached drawings and in conjunction with embodiments.

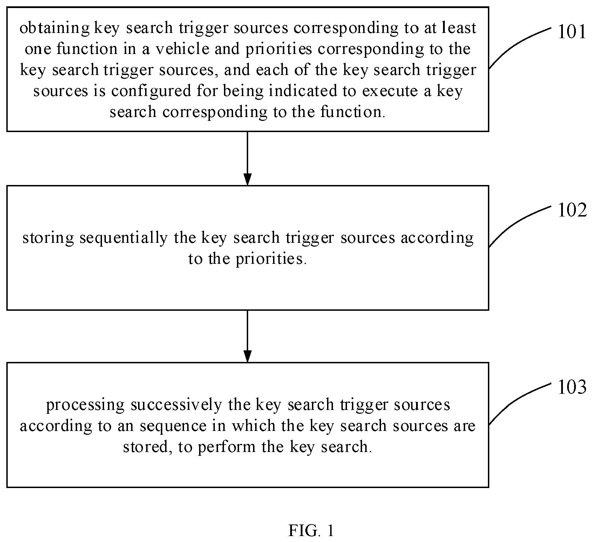

FIG. 1 is a flow diagram of a method for searching a vehicle key provided by an embodiment of the present invention; as shown in FIG. 1, the method can include:
In step 101, obtaining key search trigger sources corresponding to at least one function in a vehicle and priorities corresponding to the key search trigger sources, and each of the key search trigger sources is configured for being instructed to execute a key search corresponding to the function.

In the embodiment of the present invention, the vehicle refers to a vehicle capable of realizing the key search function and corresponding functions according to the position of the key, such as a vehicle equipped with a PEPS system, where the key search trigger sources are configured for being instructed to execute the key search corresponding to the function, and the key search trigger sources are sent by different functional modules in the vehicle according to demand. The key searches corresponding to different functions may be different, such as the vehicle unlock function searches whether the position of the key is located near the vehicle door, the vehicle one-click start function searches whether the position of the key is inside the vehicle, etc., the vehicle can receive more than one key search trigger sources, and trigger the key search corresponding to the function according to the key search trigger source.

In the embodiment of the present invention, due to the different priorities of different functions, the priorities of the key search trigger sources corresponding to different functions are also different, such as the priority of the power control function is prior to the priority of the welcome function, the priority of the door unlock function is prior to the priority of the one-click start function, and so on. The priorities of different functions can be determined according to the control logic in the vehicle or according to user Settings, which are not specifically restricted in the embodiment of the present invention.

In step 102, storing, in a sequence, the key search trigger sources according to the priorities.

In the embodiment of the present invention, after the key search trigger source corresponding to at least one function in the vehicle and the priorities corresponding to the key search trigger sources are received, the key search trigger sources can be stored sequentially according to the priorities, optionally, the sequence can be sorted according to the priorities of different key search trigger sources, and the key trigger sources can be stored according to the sequence; the storage locations of the key search trigger sources can also be preset according to the priority orders, and the key search trigger sources can be stored to the storage locations corresponding to the priorities after the key search trigger sources corresponding to at least one function are received; and which is not limited in the embodiment of the present invention.

In step 103, processing successively the key search trigger sources according to the sequence in which the key search trigger sources are stored, to perform the key search.

In the embodiment of the present invention, after the key search trigger sources are stored sequentially according to the priorities, the key search trigger sources can be processed sequentially according to the sequence of the key search trigger source, that is, according to the storage sequence of the key search trigger sources, the key search of the corresponding function can be triggered sequentially. When the key search is successful, the position of the key is known, and the key search can be recorded as completed. When the key search fails, it can be triggered successively until all the received key search trigger sources are triggered to conduct the key search.

In the embodiment of the present invention, when the key search trigger source corresponding to at least one function is obtained and the priorities corresponding to the key search trigger sources are obtained, the key search trigger sources can be sequentially stored according to the priorities of the key search trigger sources, and then the key search trigger sources can be sequentially processed according to the sequence of the key search trigger sources to perform the key search. After the key search trigger sources are received at this time, the key search trigger sources can be stored and processed according to the priorities, which does not require continuous sending and multiple receiving, improving the processing efficiency of the key search trigger sources and reducing power consumption. When other modules fail, the key search can be performed according to the stored key search trigger sources. The normal realization of the vehicle key search function and the safety of the vehicle are ensured.

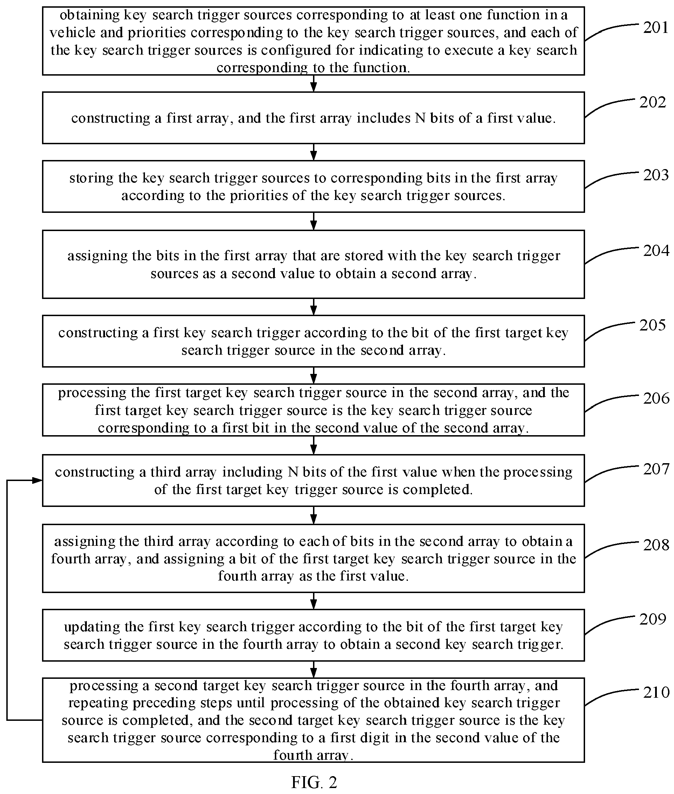

FIG. 2 is a flow diagram of another method for searching a vehicle key provided by an embodiment of the present invention; as shown in FIG. 2, the method can include:
In step 201, obtaining key search trigger sources corresponding to at least one function in a vehicle and priorities corresponding to the key search trigger sources, and each of the key search trigger sources is configured for being instructed to execute a key search corresponding to the function.

In the embodiment of the present invention, the step 201 can correspond to the relevant description of above step 101, which will not be repeated here in order to avoid repetition.

Optionally, the vehicle includes N key search trigger sources corresponding to N functions.

In the embodiment of the present invention, the types of functions may vary according to the different vehicle models, configurations, etc., and the types of corresponding key search triggers may also vary. For example, when the vehicle includes N functions, it may include N key search trigger sources, where the function refers to the function that needs to be realized by key search in the vehicle.

For example, there are 11 key search functions required in the vehicle, corresponding to the key search trigger sources including Trigger1, Trigger2, Trigger3..., Trigger10, and Trigger11; the priorities of 11 key search trigger sources are decreased gradually from the Trigger1 to the Trigger11. At this time, the vehicle search trigger sources Trigger1, Trigger2, Trigger6 and Trigger11 are obtained.

In step 202, constructing a first array, and the first array includes N bits of a first value.

In the embodiment of the present invention, the storage locations corresponding to the priorities can be preset by constructing the first array, where the first array contains N bits of the first value, optionally, the first value is the initial value, indicating that the bit where the value is located does not store the search trigger source, and the first value can be any value such as 0, 1, 2, 3, etc.

For example, taking N being 11 and the first value being 0 as an example, the first array BUFFER1[00000000000] is constructed after Trigger1, Trigger2, Trigger6, and Trigger11 are obtained.

In step 203, storing the key search trigger sources to corresponding bits in the first array according to the priorities of the key search trigger sources.

In the embodiment of the present invention, since the first array includes N bits of the first value, the first array includes the storage locations of the N key search trigger sources in the vehicle. At this time, the bit of the key search trigger source can be determined according to the priority of the key search trigger source, for example, in case that the greater the value of the priority, the lower the priority, then when the priory is 1, the bit is 1; when the priory is 3, the bit is 3; and when the priory is 11, the bit is 11 and so on. Therefore, the key search trigger sources can be stored in the corresponding bits in the first array, without comparing the priority order between different key search trigger sources, the key search trigger sources can be stored in the priority order. The efficiency of processing key search trigger sources is improved.

In step 204, assigning the bits in the first array that are stored with the key search trigger sources as a second value to obtain a second array.

In the embodiment of the present invention, when the first array is stored with the key search trigger sources, the second array can be obtained by assigning the bits where the key search trigger sources are stored to the second value, the second value indicates that the bit is stored with the key search trigger source; and the second value can be any value different from the first value. Thus, the storage state of the key search trigger sources can be determined through the second array.

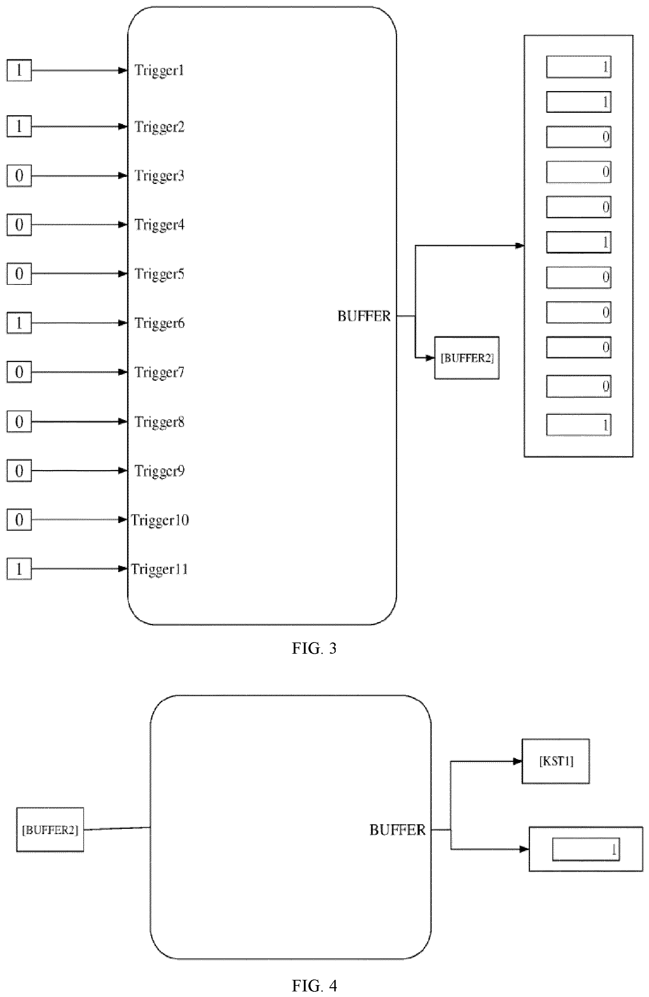

For example, taking the second value being 1 as an example, FIG. 3 is a schematic diagram of a process of assigning a second array provided by an embodiment of the present invention. As shown in FIG. 3, when Trigger1, Trigger2, Trigger6, and Trigger11 are obtained, the bits corresponding to priorities in the first array are assigned to 1, so as to obtain the second array BUFFER2[11000100001].

In step 205, constructing a first key search trigger according to the bit of the first target key search trigger source in the second array.

In the embodiment of the present invention, the Key Search Trigger (KST) is used to represent the currently processed key search trigger source, and the first key search trigger can be constructed according to the first target key search trigger source prior to the key search trigger source. The key search trigger can be defined according to the priority of the search trigger source, or according to the type of the search trigger source, which will not be specially limited in the embodiment of the present invention.

For example, FIG. 4 is a schematic diagram of a process of constructing a first key search trigger provided by an embodiment of the present invention, as shown in FIG. 4, when the first target key search trigger source is the first bit Trigger1 in the second array, to construct the first key search trigger KST1 = 1, then the current processed first target key search trigger source is Trigger1, and the second array is stored with Trigger1, Trigger2, Trigger6, and Trigger11.

In step 206, processing the first target key search trigger source in the second array, and the first target key search trigger source is the key search trigger source corresponding to a first bit in the second value of the second array.

In the embodiment of the present invention, the key search trigger source corresponding to the first bit in the second value of the second array can be taken as the first target key search trigger source according to the ordering rules and assignment rules of the second array, that is, the first target key search trigger source is the key search trigger source with the highest priority among the unprocessed key search trigger sources. The first target key search trigger source is processed, which can be key search corresponding to trigger function according to the first target key search trigger source, or can be that the stored first target key search trigger source is sent to the corresponding key search module, which is not specifically limited in the embodiment of the present invention.

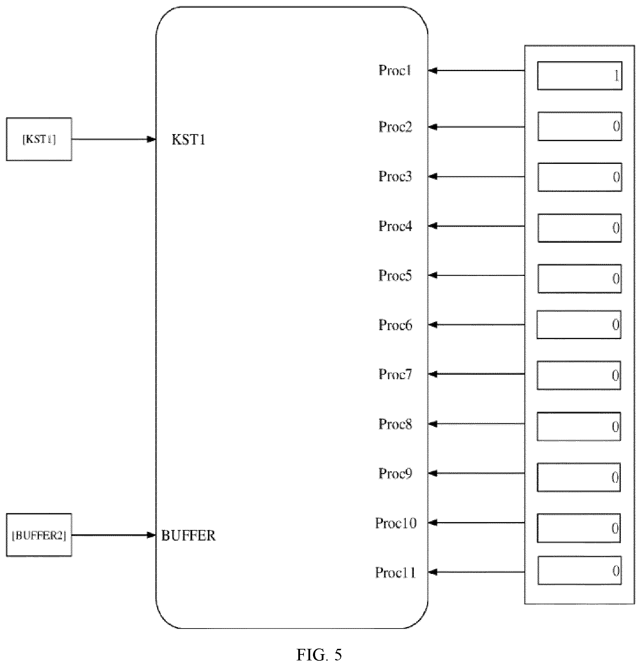

For example, FIG. 5 is a schematic diagram of a process of processing a first target key search trigger source provided by an embodiment of the present invention, as shown in FIG. 5, in the second array BUFFER2[11000100001], the first bit of the second value "1" is the first bit of the second array, the second bit of the first value is the second bit of the second array, and the third bit of the first value is the sixth bit of the second array, then Trigger1 corresponding to the first bit of the second array is determined to be the first target key search source. At this time, Trigger1 is executed according to KST1, thus executing the key search process of proc1 (process 1), in which the valid key search trigger source is Trigger1.

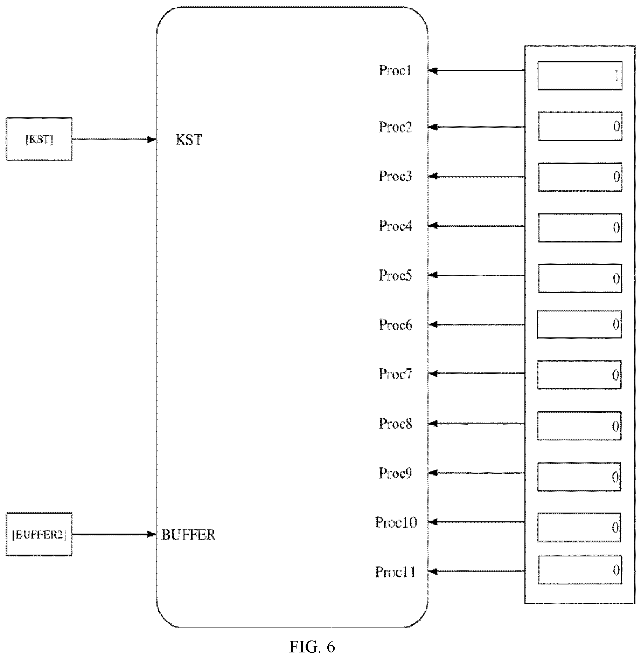

FIG. 6 is a schematic diagram of a process of processing another first target key search trigger source provided by an embodiment of the present invention, as shown in FIG. 6, in case that only the first target key search trigger source is stored in the second array, the key search trigger is defined as KST corresponding to the first target key search trigger source Trigger1. Then Trigger1 is executed according to the key search trigger KST, and the key search process of proc1 is executed. The valid key search trigger source in the process is Trigger1.

In step 207, constructing a third array including N bits of the first value when the processing of the first target key trigger source is completed.

In the embodiment of the present invention, when processing the first target key search trigger source, the position of the key can be determined, or the position of the key cannot be determined, etc. In the case that the position of the key can be determined, the key search can be terminated and the key search is completed; in the case that the position of the key cannot be determined, etc., the third array can be further constructed. The construction of the third array may correspond to the construction of the first array referred to in step 202 above, and which is not specially limited in the embodiment of the present invention.

For example, constructing a third array BUFFER3[00000000000].

In step 208, assigning the third array according to each of bits in the second array to obtain a fourth array, and assigning a bit of the first target key search trigger source in the fourth array as the first value.

In the embodiment of the present invention, the third array can be assigned according to each bit in the second array, so that the key search trigger sources stored in the second array are stored in the third array to obtain the fourth array. At this time, since the processing of the first target key search trigger source has been completed, therefore, the bit of the first target key search trigger source in the fourth array can be further assigned to the first value, so that the processed first target key search trigger source can be abandoned and the storage pressure can be reduced.

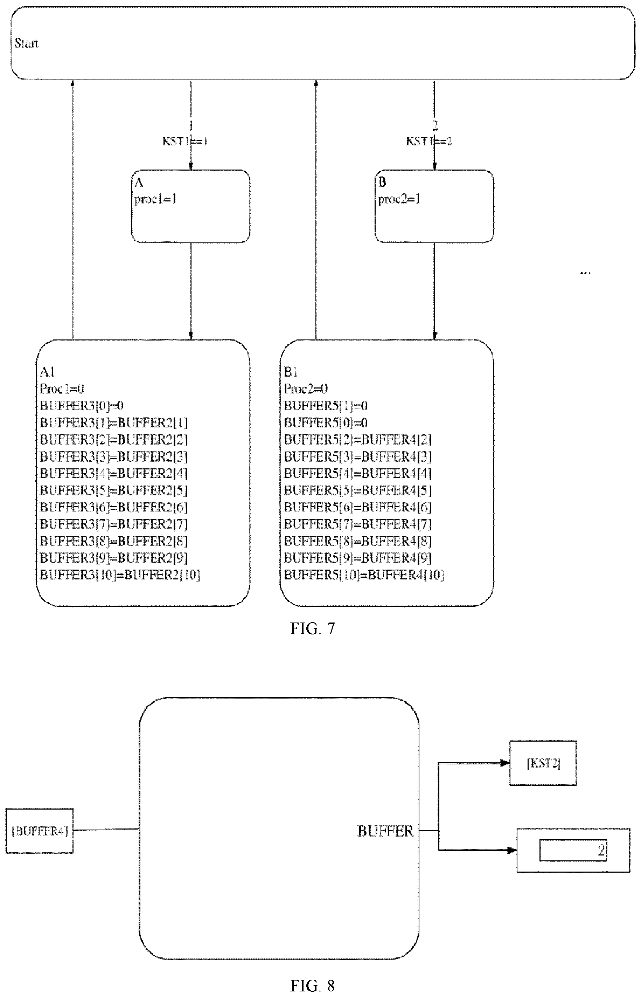

For example, FIG. 7 is a schematic diagram of a process of assigning a third array provided by an embodiment of the present invention. As shown in FIG. 7, after proc1=1 is executed according to KST1=1, the value of each bit in BUFFER2 is assigned to the completely empty third array BUFFER3, and storage bit of Trigger1 in BUFFER3 is assigned as 0, so as to obtain BUFFER4[01000100001].

In the embodiment of the present invention, referring to the relevant instructions in FIG. 6, when only the first target key search trigger source is stored in the second array, the key search trigger is defined as KST corresponding to the first target key search trigger source Trigger1, then Trigger1 is determined to be executed according to the key search trigger KST, and after the key search process of proc1 is executed, the value of each bit in BUFFER2 is assigned to the completely empty third array BUFFER3, and storage bit of Trigger1 in BUFFER3 is assigned as 0, so as to obtain BUFFER4[01000100001].

In step 209, updating the first key search trigger according to the bit of the first target key search trigger source in the fourth array to obtain a second key search trigger.

In the embodiment of the present invention, after the processing of the first target key search trigger source is completed, the first key search trigger can be updated to obtain the second key search trigger according to the second target key search trigger source of subsequent processing, so as to process the second target key search trigger source according to the second key search trigger representation.

For example, FIG. 8 is a schematic diagram of a process of updating a second key search trigger provided by an embodiment of the present invention. As shown in FIG. 7, in the key search trigger sources stored by BUFFER4[01000100001], Trigger2 is used as the second target key search trigger source, then the first key search trigger KST1 = 1 is updated to KST2 = 2, and so on.

In step 210, processing a second target key search trigger source in the fourth array, and repeating preceding steps until processing of the obtained key search trigger source is completed, and the second target key search trigger source is the key search trigger source corresponding to a first bit in the second value of the fourth array.

In the embodiment of the present invention, the key search trigger source corresponding to the first bit in the second value of the fourth array can be determined as the second target search trigger source, that is, the search trigger source stored in the fourth array with the highest priority can be determined as the second target search trigger source, in which case the second target key search trigger source can be processed, the details refer to the relevant description in Step 206 above, so as to avoid repetition, which will not be repeated here.

In the embodiment of the present invention, when multiple key search trigger sources are obtained, steps 207 to 209 above can be repeated to sequentially process the stored multiple key search trigger sources according to the priority orders until the processing of the obtained key search trigger sources is completed.

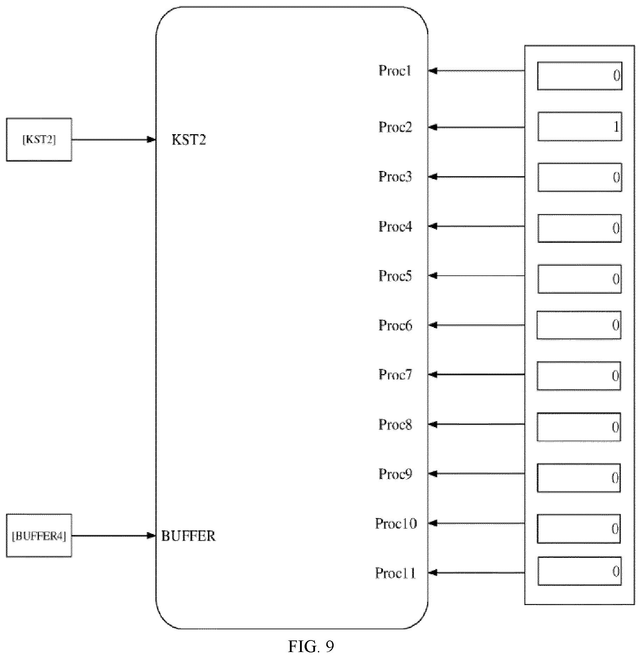

For example, FIG. 9 is a schematic diagram of a process of processing a secondary target key search trigger source provided by an embodiment of the present invention. As shown in FIG. 9, in the fourth array, Trigger2 is executed according to KST2, thus the key search process proc2 = 1 is executed, and the effective key search trigger source in the process is Trigger2.

After proc2 = 1 is complete, as shown in IG. 7, a fifth array BUFFERS = [00000000000] can be constructed, and the value of BUFFER4 is assigned to BUFFERS, and further BUFFER5[1] is assigned as 0, and so on to the obtained key search trigger sources.

Optionally, after step 210, the method further includes:
In step S11, re-obtaining the key search trigger source corresponding to at least one function in the vehicle, and performing subsequent steps to process the re-obtained key search trigger source to perform key searching.

In the embodiment of the present invention, in the case that the processing of the stored key search trigger source is completed, the key search trigger source corresponding to at least one function in the vehicle can be re-obtained, and the subsequent steps can be performed to process the re-obtained key search trigger source to perform key searching; and the key search trigger sources obtained twice can be the same or different, optionally, in the case that the position of the key has been determined in steps 201 to 210, the key search trigger sources in the vehicle can be re-obtained after a period of time, and in case that the position of the key has not been determined in steps 201 to 210, the key search trigger sources in the vehicle can be directly re-obtained, which is not specially limited in the embodiment of the present invention.

In the embodiment of the present invention, when the key search trigger source corresponding to at least one function is obtained and the priorities corresponding to the key search trigger sources are obtained, the key search trigger sources can be sequentially stored according to the priorities of the key search trigger sources, and then the key search trigger sources can be sequentially processed according to the sequence of the key search trigger sources to perform the key search. After the key search trigger sources are received at this time, the key search trigger sources can be stored and processed according to the priorities, which does not require continuous sending and multiple receiving, improving the processing efficiency of the key search trigger sources and reducing power consumption. When other modules fail, the key search can be performed according to the stored key search trigger sources. The normal realization of the vehicle key search function and the safety of the vehicle are ensured.

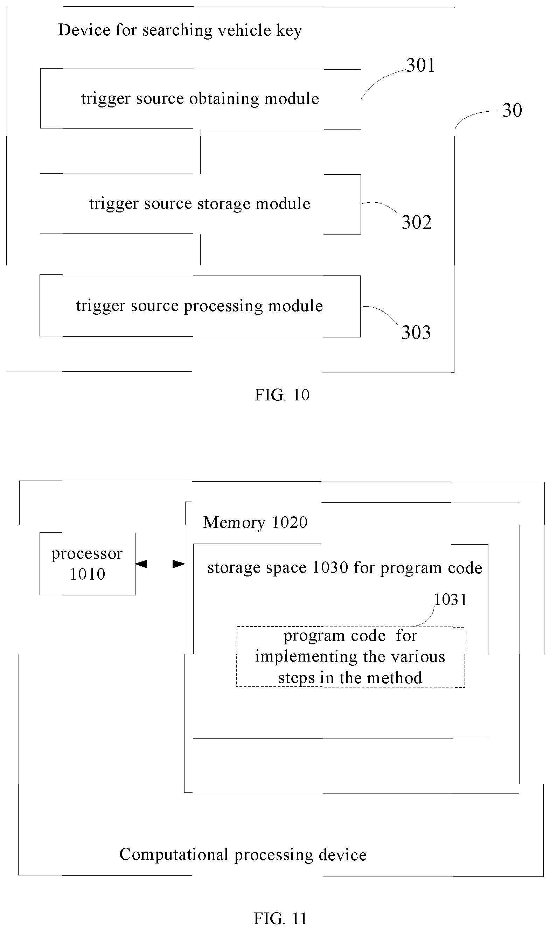

FIG. 10 is a structural block diagram of a device for searching a vehicle key provided by an embodiment of the present invention, as shown in FIG. 10, the device can include:
a trigger source obtaining module 301, configured for obtaining key search trigger sources corresponding to at least one function in a vehicle and priorities corresponding to the key search trigger sources, and each of the key search trigger sources is configured for being instructed to execute a key search corresponding to the function;
a trigger source storage module 302, configured for storing, in a sequence, the key search trigger sources according to the priorities; and
a trigger source processing module 303, configured for processing successively the key search trigger sources according to the sequence in which the key search trigger sources are stored, to perform the key search.

Optionally, the trigger source storage module 302 includes:
a first array construction sub-module, configured for constructing a first array, and the first array includes N bits of a first value;
a first array storage sub-module, configured for storing the key search trigger sources to corresponding bits in the first array according to the priorities of the key search trigger sources; and
a first array assigning sub-module, configured for assigning the bits in the first array that are stored with the key search trigger sources as a second value to obtain a second array.

Optionally, the trigger source processing module 303 includes:
a trigger source processing sub-module, configured for processing a first target key search trigger source in the second array, and the first target key search trigger source is the key search trigger source corresponding to a first bit in the second value of the second array;
a second array construction sub-module, configured for constructing a third array including N bits of the first value when the processing of the first target key trigger source is completed;
a second array assigning sub-module, configured for assigning the third array according to each of bits in the second array to obtain a fourth array, and assigning a bit of the first target key search trigger source in the fourth array as the first value; and
the trigger source processing module is further configured for processing a second target key search trigger source in the fourth array, and repeating preceding steps until processing of the obtained key search trigger source is completed, and the second target key search trigger source is the key search trigger source corresponding to a first bit in the second value of the fourth array.

Optionally, the device further includes:
a key search trigger construction module, configured for constructing a first key search trigger according to the bit of the first target key search trigger source in the second array;
a key search trigger updating module, configured for updating the first key search trigger according to the bit of the first target key search trigger source in the fourth array to obtain a second key search trigger.

Optionally, the trigger source obtaining module 301 is further configured for re-obtaining the key search trigger source corresponding to at least one function in the vehicle, and performing subsequent steps to process the re-obtained key search trigger source to perform key searching.

In the embodiment of the present invention, when the key search trigger source corresponding to at least one function is obtained and the priorities corresponding to the key search trigger sources are obtained, the key search trigger sources can be sequentially stored according to the priorities of the key search trigger sources, and then the key search trigger sources can be sequentially processed according to the sequence of the key search trigger sources to perform the key search. After the key search trigger sources are received at this time, the key search trigger sources can be stored and processed according to the priorities, which does not require continuous sending and multiple receiving, improving the processing efficiency of the key search trigger sources and reducing power consumption. When other modules fail, the key search can be performed according to the stored key search trigger sources. The normal realization of the vehicle key search function and the safety of the vehicle are ensured.

The embodiment of the present invention further provides a computer-readable storage medium that stores a computer program, when the computer program is executed by a processor, the method for searching the vehicle key in FIGS. 1 to 9 can be implemented.

The embodiment of the present invention further provides a vehicle that includes a controller that includes a memory, a processor, and a computer program stored in the memory and capable of running on the processor, and when the processor executes the computer program, the method for searching the vehicle key in FIGS. 1 to 9 can be implemented.

Those skilled in the art shall understand that embodiments of the present invention may be provided as methods, devices, or computer program products. Therefore, the embodiments of the present invention may take the form of a full hardware embodiment, a full software embodiment, or a combination of software and hardware aspects. Further, the embodiments of the present invention may take the form of a computer program product implemented on one or more computer available storage media (including, but not limited to, a disk memory, a CD-ROM, an optical memory, etc.) containing computer available program code.

The embodiment of the present invention is described by reference to flowcharts and/or block diagrams of methods, terminal equipment (systems), and computer program products based on the embodiment of the present invention. It should be understood that each process and/or block in a flowchart and/or block diagram, and a combination of processes and/or blocks in a flowchart and/or block diagram, can be implemented by a computer program instruction. These computer program instructions can be supplied to a general-purpose computer, special purpose computer, embedded processor, or other processor of programmable data processing terminal equipment to produce a machine, causes instructions executed by a processor of a computer or other programmable data processing terminal device to produce a device used to implement a function specified in one or more processes in a flowchart and/or a block or blocks in a block diagrams.

These computer program instructions may also be stored in a computer readable memory capable of directing a computer or other programmable data processing terminal device to work in a particular manner such that the instructions stored in the computer readable memory produce manufactured goods including instruction devices. The instruction device implements a function specified in one or more processes in a flowchart and/or a block or blocks in a block diagrams.

These computer program instructions may also be loaded onto a computer or other programmable data processing terminal equipment, such that a series of operational steps are performed on the computer or other programmable data processing terminal equipment to produce computer-implemented processing. The instructions thus executed on a computer or other programmable terminal device provide the steps for implementing the functions specified in one or more processes in a flowchart and/or a block or blocks in a block diagrams.

The device embodiments described above are merely schematic, where the units described as separate components may or may not be physically separate, and the components shown as units may or may not be physical units, that is, may be located in one place, or may be distributed over multiple network units. Some or all of the modules can be selected according to the actual needs to realize the purpose of the embodiment solution. It can be understood and implemented by those skilled in the art without creative labor.

Embodiments of the various components of the present invention may be implemented in hardware, in software modules running on one or more processors, or in a combination of them. Those skilled in the art should understand that a microprocessor or digital signal processor (DSP) may be used in practice to implement some or all of the functions of some or all of the components of a computational processing device according to the embodiment of the present invention. The invention may also be implemented as a device or device program for performing some or all of the methods described herein (e.g., computer programs and computer program products). The disclosed program may be stored on a computer readable medium or may have the form of one or more signals. Such signals may be downloaded from Internet sites, provided on carrier signals, or provided in any other form.

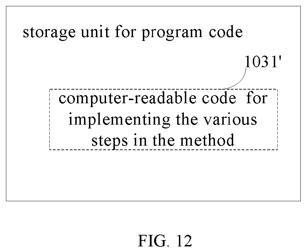

For example, Figure 11 shows a computational processing device that can implement a method based on the present invention. The computing processing device traditionally includes a processor 1010 and a computer program product in the form of memory 1020 or a computer readable medium. The memory 1020 can be an electronic memory such as a flash memory, EEPROM(electrically erasable programmable read-only memory), EPROM, a hard disk, or ROM. The memory 1020 has the storage space 1030 of the program code 1031 for executing any of the steps in the above method. For example, the storage space 1030 for program code may include individual program code 1031 for implementing the various steps in the method above. Such program code may be read from or written to one or more computer program products. These computer program products include program code carriers such as hard disks, compact disks (CDS), memory cards, or floppy disks. Such computer program products are usually portable or stationary storage units as described in FIG. 12. The storage unit may have memory segments, storage Spaces, etc. arranged similarly to memory 1020 in the computing processing device shown in FIG. 11. Program code can, for example, be compressed in an appropriate form. Typically, the memory unit includes computer-readable code 1031', that is, code that can be read by a processor such as, for example, 1010, which, when run by a computational processing device, causes that computational processing device to perform the various steps in the method described above.

Finally, it should be noted that, in this context, relational terms such as first and second order are used only to distinguish one entity from another and do not necessarily require or imply the existence of any such actual relationship or order between these entities. Furthermore, the term "includes", "contains" or any other variation thereof is intended to cover non-exclusive inclusions, so that an article or terminal equipment including a set of elements includes not only those elements but also other elements not expressly listed, or elements inherent to such article or terminal equipment. In the absence of further restrictions, the sentence "including a..." defined element does not preclude the existence of another identical element in the article or terminal equipment including the element.

## Claims

1. A method for searching a vehicle key, wherein the method comprises:
obtaining key search trigger sources corresponding to at least one function in a vehicle and priorities corresponding to the key search trigger sources, wherein each of the key search trigger sources is configured for being instructed to execute a key search corresponding to the function;
storing, in a sequence, the key search trigger sources according to the priorities; and
processing successively the key search trigger sources according to the sequence in which the key search trigger sources are stored, to perform the key search,
wherein the vehicle comprises N key search trigger sources corresponding to N functions, and the step of storing, in the sequence, the key search trigger sources according to the priorities comprises:
constructing a first array, wherein the first array comprises N bits of a first value;
storing the key search trigger sources to corresponding bits in the first array according to the priorities of the key search trigger sources; and
assigning the bits in the first array that are stored with the key search trigger sources as a second value to obtain a second array,
and wherein the step of processing successively the key search trigger sources according to the sequence in which the key search trigger sources are stored comprises:
processing a first target key search trigger source in the second array, wherein the first target key search trigger source is the key search trigger source corresponding to a first bit in the second value of the second array;
constructing a third array comprising N bits of the first value when the processing of the first target key trigger source is completed;
assigning the third array according to each of bits in the second array to obtain a fourth array, and assigning a bit of the first target key search trigger source in the fourth array as the first value; and
processing a second target key search trigger source in the fourth array, and repeating preceding steps until processing of the obtained key search trigger source is completed, wherein the second target key search trigger source is the key search trigger source corresponding to a first bit in the second value of the fourth array.

2. The method according to claim 1, **characterized in that** after the step of assigning the bits in the first array that are stored with the key search trigger sources as the second value to obtain the second array, the method further comprises:
constructing a first key search trigger according to the bit of the first target key search trigger source in the second array;
after the step of assigning the third array according to each of bits in the second array to obtain the fourth array, and assigning the bit of the first target key search trigger source in the fourth array as the first value, the method further comprises:
updating the first key search trigger according to the bit of the first target key search trigger source in the fourth array to obtain a second key search trigger.

3. The method according to claim 1, **characterized in that** after the step of processing successively the key search trigger sources according to the sequence in which the key search trigger sources are stored, the method further comprises:
re-obtaining the key search trigger source corresponding to at least one function in the vehicle, and performing subsequent steps to process the re-obtained key search trigger source to perform key searching.

4. A device (30) for searching a vehicle key, wherein the device comprises:
a trigger source obtaining module (301), configured for obtaining key search trigger sources corresponding to at least one function in a vehicle and priorities corresponding to the key search trigger sources, wherein each of the key search trigger sources is configured for being instructed to execute a key search corresponding to the function;
a trigger source storage module (302), configured for storing, in a sequence, the key search trigger sources according to the priorities; and
a trigger source processing module (303), configured for processing successively the key search trigger sources according to the sequence in which the key search trigger sources are stored, to perform the key search,
wherein the trigger source storage module (302) comprises:
a first array construction sub-module, configured for constructing a first array, wherein the first array comprises N bits of a first value;
a first array storage sub-module, configured for storing the key search trigger sources to corresponding bits in the first array according to the priorities of the key search trigger sources; and
a first array assigning sub-module, configured for assigning the bits in the first array that are stored with the key search trigger sources as a second value to obtain a second array.
and wherein the trigger source processing module (303) comprises:
a trigger source processing sub-module, configured for processing a first target key search trigger source in the second array, wherein the first target key search trigger source is the key search trigger source corresponding to a first bit in the second value of the second array;
a second array construction sub-module, configured for constructing a third array comprising N bits of the first value when the processing of the first target key trigger source is completed;
a second array assigning sub-module, configured for assigning the third array according to each of bits in the second array to obtain a fourth array, and assigning a bit of the first target key search trigger source in the fourth array as the first value; and
the trigger source processing module (303) is further configured for processing a second target key search trigger source in the fourth array, and repeating preceding steps until processing of the obtained key search trigger source is completed, wherein the second target key search trigger source is the key search trigger source corresponding to a first bit in the second value of the fourth array.

5. A computer-readable storage medium that stores a computer program (1031), when the computer program is executed by a processor (1010), the steps of the method for searching the vehicle key according to any one of claims 1 to 3 are implemented.

6. A vehicle, comprising a controller which comprises a memory (1020), a processor (1010) and a computer program (1031) stored in the memory and capable of running on the processor, when the processor executes the computer program, the steps of the method for searching the vehicle key according to any one of claims 1 to 3 are implemented.

7. An electronic apparatus comprising a processor (1010), a memory (1020), and a program (1031) or instructions stored in the memory and capable of running on the processor, when the program or instructions are executed by the processor, the steps of the method for searching the vehicle key according to any one of claims 1 to 3 are implemented.

8. A computer program (1031), comprising a computer readable code (1031'), when the computer readable code runs on a computing processing apparatus, the computing processing device is caused to execute the steps of the method for searching the vehicle key according to any one of claims 1 to 3.

## Patentansprüche

1. Verfahren zum Suchen eines Fahrzeugschlüssels, wobei das Verfahren die folgenden Schritte aufweist:
Erfassen von Schlüsselsuche-Trigger-Quellen, die mindestens einer Funktion in einem Fahrzeug entsprechen, und Prioritäten, die den Schlüsselsuche-Trigger-Quellen entsprechen, wobei jede der Schlüsselsuche-Trigger-Quellen dazu ausgebildet ist, zum Durchführen einer Schlüsselsuche entsprechend der Funktion angewiesen zu werden;
Speichern, in einer Sequenz, der Schlüsselsuche-Trigger-Quellen gemäß den Prioritäten; und
sukzessives Verarbeiten der Schlüsselsuche-Trigger-Quellen gemäß der Sequenz, in welcher die Schlüsselsuche-Trigger-Quellen gespeichert sind, um die Schlüsselsuche durchzuführen,
wobei das Fahrzeug N Schlüsselsuche-Trigger-Quellen aufweisen, die N Funktionen entsprechen, und der Schritt des Speicherns der Schlüsselsuche-Trigger-Quellen in der Sequenz gemäß den Prioritäten die folgenden Schritte aufweist:
Erstellen eines ersten Arrays, wobei das erste Array N Bits eines ersten Werts aufweist;
Speichern der Schlüsselsuche-Trigger-Quellen in entsprechenden Bits in dem ersten Array gemäß den Prioritäten der Schlüsselsuche-Trigger-Quellen; und
Zuweisen der Bits in dem ersten Array, die mit den Schlüsselsuche-Trigger-Quellen gespeichert wurden, als einen zweiten Wert, um ein zweites Array zu erhalten,
und wobei der Schritt des sukzessiven Verarbeitens der Schlüsselsuche-Trigger-Quellen gemäß der Sequenz, in welcher die Schlüsselsuche-Trigger-Quellen gespeichert sind, die folgenden Schritte aufweist:
Verarbeiten einer ersten Ziel-Schlüsselsuche-Trigger-Quelle in dem zweiten Array, wobei die erste Ziel-Schlüsselsuche-Trigger-Quelle die Schlüsselsuche-Trigger-Quelle ist, welche einem ersten Bit in dem zweiten Wert des zweiten Arrays entspricht;
Erstellen eines dritten Arrays, welches N Bits des ersten Werts aufweist, wenn die Verarbeitung der ersten Ziel- Schlüsselsuche-Trigger-Quelle abgeschlossen ist;
Zuweisen des dritten Arrays gemäß jedem Bit in dem zweiten Array, um ein viertes Array zu erhalten, und Zuweisen eines Bits der ersten Ziel-Schlüsselsuche-Trigger-Quelle in dem vierten Array als den ersten Wert; und
Verarbeiten einer zweiten Ziel-Schlüsselsuche-Trigger-Quelle in dem vierten Array, und Wiederholen vorangehender Schritte, bis die Verarbeitung der erhaltenen Schlüsselsuche-Trigger-Quelle abgeschlossen ist, wobei die zweite Ziel-Schlüsselsuche-Trigger-Quelle die Schlüsselsuche-Trigger-Quelle ist, welche einem ersten Bit in dem zweiten Wert des vierten Arrays entspricht.

2. Verfahren nach Anspruch 1, **dadurch gekennzeichnet, dass** das Verfahren nach dem Schritt des Zuweisens der Bits in dem ersten Array, die mit den Schlüsselsuche-Trigger-Quellen gespeichert wurden, als einen zweiten Wert, um ein zweites Array zu erhalten, den folgenden Schritt aufweist:
Erstellen eines ersten Schlüsselsuche-Triggers gemäß dem Bit der ersten Ziel-Schlüsselsuche-Trigger-Quelle in dem zweiten Array;
wobei das Verfahren nach dem Schritt des Zuweisens des dritten Arrays gemäß jedem Bit in dem zweiten Array, um das vierte Array zu erhalten, und des Zuweisens des Bits der ersten Ziel- Schlüsselsuche-Trigger-Quelle in dem vierten Array als den ersten Wert, den folgenden Schritt aufweist:
Aktualisieren des ersten Schlüsselsuche-Triggers gemäß dem Bit der ersten Ziel-Schlüsselsuche-Trigger-Quelle in dem vierten Array, um einen zweiten Schlüsselsuche-Trigger zu erhalte.

3. Verfahren nach Anspruch 1, **dadurch gekennzeichnet, dass** das Verfahren nach dem Schritt des sukzessiven Verarbeitens der Schlüsselsuche-Trigger-Quellen gemäß der Sequenz, in welcher die Schlüsselsuche-Trigger-Quellen gespeichert sind, den folgenden Schritt aufweist:
erneutes Erhalten der Schlüsselsuche-Trigger-Quelle, welche mindestens einer Funktion in dem Fahrzeug entspricht, und Durchführen nachfolgender Schritte, um die erneut erhaltene Schlüsselsuche-Trigger-Quelle zur Durchführung der Schlüsselsuche zu verarbeiten.

4. Vorrichtung (30) zum Suchen eines Fahrzeugschlüssels, wobei die Vorrichtung aufweist:
ein Trigger-Quellen-Erfassungsmodul (301), das zum Erfassen von Schlüsselsuche-Trigger-Quellen, die mindestens einer Funktion in einem Fahrzeug entsprechen, und Prioritäten, die den Schlüsselsuche-Trigger-Quellen entsprechen, ausgebildet ist, wobei jede der Schlüsselsuche-Trigger-Quellen dazu ausgebildet ist, zum Durchführen einer Schlüsselsuche entsprechend der Funktion angewiesen zu werden;
ein Trigger-Quellen-Speichermodul (302), das dazu ausgebildet ist, die Schlüsselsuche-Trigger-Quellen in einer Sequenz gemäß den Prioritäten zu speichern; und
ein Trigger-Quellen-Verarbeitungsmodul (303), das dazu ausgebildet ist, die Schlüsselsuche-Trigger-Quellen gemäß der Sequenz, in welcher die Schlüsselsuche-Trigger-Quellen gespeichert sind, sukzessive zu verarbeiten, um die Schlüsselsuche durchzuführen,
wobei das Trigger-Quellen-Speichermodul (302) aufweist:
ein erstes Array-Erstellungssubmodul, das zum Erstellen eines ersten Arrays ausgebildet ist, wobei das erste Array N Bits eines ersten Werts aufweist;
ein erstes Array-Speichersubmodul, das dazu ausgebildet ist, die Schlüsselsuche-Trigger-Quellen in entsprechenden Bits in dem ersten Array gemäß den Prioritäten der Schlüsselsuche-Trigger-Quellen zu speichern; und
ein erstes Array-Zuweisungssubmodul, das dazu ausgebildet ist, Bits in dem ersten Array, die mit den Schlüsselsuche-Trigger-Quellen gespeichert wurden, als einen zweiten Wert zuzuweisen, um ein zweites Array zu erhalten,
und wobei das Trigger-Quellen-Verarbeitungsmodul (303) aufweist:
ein Trigger-Quellen-Verarbeitungssubmodul, das dazu ausgebildet ist, eine erste Ziel-Schlüsselsuche-Trigger-Quelle in dem zweiten Array zu verarbeiten, wobei die erste Ziel-Schlüsselsuche-Trigger-Quelle die Schlüsselsuche-Trigger-Quelle ist, welche einem ersten Bit in dem zweiten Wert des zweiten Arrays entspricht;
ein zweites Array-Erstellungssubmodul, das dazu ausgebildet ist, ein drittes Array zu erstellen, welches N Bits des ersten Werts aufweist, wenn die Verarbeitung der ersten Ziel-Schlüsselsuche-Trigger-Quelle abgeschlossen ist;
ein zweites Array-Zuweisungssubmodul, das dazu ausgebildet ist, das dritte Array gemäß jedem Bit in dem zweiten Array zuzuweisen, um ein viertes Array zu erhalten, und ein Bit der ersten Ziel-Schlüsselsuche-Trigger-Quelle in dem vierten Array als den ersten Wert zuzuweisen; und
wobei das Trigger-Quellen-Verarbeitungsmodul (303) ferner zum Verarbeiten einer zweiten Ziel-Schlüsselsuche-Trigger-Quelle in dem vierten Array, und zum Wiederholen vorangehender Schritte, bis die Verarbeitung der erhaltenen Schlüsselsuche-Trigger-Quelle abgeschlossen ist, ausgebildet ist, wobei die zweite Ziel-Schlüsselsuche-Trigger-Quelle die Schlüsselsuche-Trigger-Quelle ist, welche einem ersten Bit in dem zweiten Wert des vierten Arrays entspricht.

5. Computerlesbares Speichermedium, welches ein Computerprogramm (1031) speichert, wobei, wenn das Computerprogramm von einem Prozessor (1010) ausgeführt wird, die Schritte des Verfahrens zum Suchen des Fahrzeugschlüssels nach einem der Ansprüche 1 bis 3 implementiert werden.

6. Fahrzeug mit einem Controller, der einen Speicher (1020), einen Prozessor (1010) und ein Computerprogramm (1031), das in dem Speicher gespeichert ist und geeignet ist, auf dem Prozessor zu laufen, wobei, wenn der Prozessor das Computerprogramm ausführt, die Schritte des Verfahrens zum Suchen des Fahrzeugschlüssels nach einem der Ansprüche 1 bis 3 implementiert werden.

7. Elektronische Vorrichtung mit einem Prozessor (1010), einem Speicher (1020) und einem Programm (1031) oder Befehlen, die in dem Speicher gespeichert sind und geeignet sind, auf dem Prozessor zu laufen, wobei, wenn der Prozessor das Programm oder die Befehle ausführt, die Schritte des Verfahrens zum Suchen des Fahrzeugschlüssels nach einem der Ansprüche 1 bis 3 implementiert werden.

8. Computerprogramm (1031) mit einem computerlesbaren Code (1031'), wobei, wenn der computerlesbare Code auf einem Rechenverarbeitungsgerät läuft, das Rechenverarbeitungsgerät veranlasst wird, die Schritte des Verfahrens zum Suchen des Fahrzeugschlüssels nach einem der Ansprüche 1 bis 3 auszuführen.

## Revendications

1. Procédé pour rechercher une clé de véhicule, dans lequel le procédé comprend les étapes consistant à :
obtenir des sources de déclencheur de recherche de clé correspondant à au moins une fonction d'un véhicule et des propriétés correspondant aux sources de déclencheur de recherche de clé, dans lequel chacune des sources de déclencheur de recherche de clé est configurée pour recevoir une instruction d'exécution d'une recherche de clé correspondant à la fonction ;
mémoriser, selon une séquence, les sources de déclencheur de recherche de clé conformément aux priorités ; et
traiter successivement les sources de déclencheur de recherche de clé conformément à la séquence selon laquelle sont mémorisées les sources de déclencheur de recherche de clé, pour mettre en œuvre la recherche de clé,
dans lequel le véhicule comprend N sources de déclencheur de recherche de clé correspondant à N fonctions, et l'étape de mémorisation, selon la séquence, des sources de déclencheur de recherche de clé conformément aux priorités consiste à :
construire une première combinaison, dans lequel la première combinaison comprend N bits d'une première valeur ;
mémoriser les sources de déclencheur de recherche de clé dans les bits correspondants de la première combinaison conformément aux priorités des sources de déclencheur de recherche de clé ; et
attribuer les bits dans la première combinaison qui ont été mémorisés avec les sources de déclencheur de recherche de clé en tant que seconde valeur pour obtenir une deuxième combinaison,
et dans lequel l'étape de traitement successivement des sources de déclencheur de recherche de clé conformément à la séquence selon laquelle sont mémorisées les sources de déclencheur de recherche de clé consiste à :
traiter une première source de déclencheur de recherche de clé cible dans la deuxième combinaison, dans lequel la première source de déclencheur de recherche de clé cible est la source de déclencheur de recherche de clé correspondant à un premier bit de la seconde valeur de la deuxième combinaison ;
construire une troisième combinaison comprenant N bits de la première valeur lorsque le traitement de la première source de déclencheur de clé cible est terminé ;
attribuer la troisième combinaison, conformément à chacun des bits de la deuxième combinaison pour obtenir une quatrième combinaison, et attribuer un bit de la première source de déclencheur de recherche de clé cible dans la quatrième combinaison en tant que la première valeur ; et
traiter une seconde source de déclencheur de recherche de clé cible dans la quatrième combinaison, et répéter les étapes précédentes jusqu'à ce que le traitement de la source de déclencheur de recherche de clé obtenue soit terminé,
dans lequel la seconde source de déclencheur de recherche de clé cible est la source de déclencheur de recherche de clé correspondant à un premier bit de la seconde valeur de la quatrième combinaison.

2. Procédé selon la revendication 1, **caractérisé en ce que**, après l'étape d'attribution des bits dans la première combinaison qui ont été mémorisés avec les sources de déclencheur de recherche de clé en tant que la seconde valeur pour obtenir la deuxième combinaison, le procédé comprend en outre les étapes consistant à :
construire un premier déclencheur de recherche de clé conformément au bit de la première source de déclencheur de recherche de clé cible dans la deuxième combinaison ;
après l'étape d'attribution de la troisième combinaison conformément à chacun des bits dans la deuxième combinaison pour obtenir la quatrième combinaison, et d'attribution du bit de la première source de déclencheur de recherche de clé cible dans la quatrième combinaison en tant que la première valeur, le procédé comprend en outre l'étape consistant à :
mettre à jour le premier déclencheur de recherche de clé conformément au bit de la première source de déclencheur de recherche de clé cible dans la quatrième combinaison pour obtenir un second déclencheur de recherche de clé.

3. Procédé selon la revendication 1, caractérisé ce que, après l'étape de traitement successivement des sources de déclencheur de recherche de clé conformément à la séquence selon laquelle sont mémorisées les sources de déclencheur de recherche de clé, le procédé comprend en outre l'étape consistant à :
obtenir de nouveau la source de déclencheur de recherche de clé correspondant à au moins une fonction du véhicule, et mettre en œuvre des étapes suivantes pour traiter la source de déclencheur de recherche de clé obtenue de nouveau pour mettre en œuvre une recherche de clé.

4. Dispositif (30) de recherche d'une clé de véhicule, dans lequel le dispositif comprend :
un module d'obtention de sources de déclencheur (301), configuré pour obtenir des sources de déclencheur de recherche de clé correspondant à au moins une fonction d'un véhicule et des priorités correspondant aux sources de déclencheur de recherche de clé, dans lequel chacune des sources de déclencheur de recherche de clé est configurée pour recevoir une instruction d'exécution d'une recherche de clé correspondant à la fonction ;
un module de mémorisation de sources de déclencheur (302), configuré pour mémoriser, selon une séquence, les sources de déclencheur de recherche de clé conformément aux priorités ; et
un module de traitement de sources de déclencheur (303), configuré pour traiter successivement les sources de déclencheur de recherche de clé conformément à la séquence selon laquelle sont mémorisées les sources de déclencheur de recherche de clé, pour mettre en œuvre la recherche de clé,
dans lequel le module de mémorisation de sources de déclencheur (302) comprend :
un premier sous-module de construction de combinaison, configuré pour construire une première combinaison, dans lequel la première combinaison comprend N bits d'une première valeur ;
un premier sous-module de mémorisation de combinaison, configuré pour mémoriser les sources de déclencheur de recherche de clé dans des bits correspondant dans la première combinaison conformément aux priorités des sources de déclencheur de recherche de clé ; et
un premier sous-module d'attribution de combinaison, configuré pour attribuer les bits dans la première combinaison qui ont été mémorisés avec les sources de déclencheur de recherche de clé en tant que seconde valeur pour obtenir une deuxième combinaison,
et dans lequel le module de traitement de sources de déclencheur (303) comprend :
un sous-module de traitement de source de déclencheur, configuré pour traiter une première source de déclencheur de recherche de clé cible dans la deuxième combinaison, dans lequel la première source de déclencheur de recherche de clé cible est la source de déclencheur de recherche de clé correspondant à un premier bit de la seconde valeur de la deuxième combinaison ;
un second sous-module de construction de combinaison, configuré pour construire une troisième combinaison comprenant N bits de la première valeur lorsque le traitement de la première source de déclencheur de clé cible est terminé ;
un second sous-module d'attribution de combinaison, configuré pour attribuer la troisième combinaison conformément à chacun des bits dans la deuxième combinaison pour obtenir une quatrième combinaison, et pour attribuer un bit de la première source de déclencheur de recherche de clé cible dans la quatrième combinaison en tant que la première valeur ; et
le module de traitement de sources de déclencheur (303) est en outre configuré pour traiter une seconde source de déclencheur de recherche de clé cible dans la quatrième combinaison, et pour répéter les étapes précédentes jusqu'à ce que le traitement de la source de déclencheur de recherche de clé obtenue soit terminé, dans lequel la seconde source de déclencheur de recherche de clé cible est la source de déclencheur de recherche de clé correspondant à un premier bit de la seconde valeur de la quatrième combinaison.

5. Support d'informations lisible par ordinateur qui maintient un programme d'ordinateur (1031), lorsque le programme d'ordinateur est exécuté par un processeur (1010), les étapes du procédé pour rechercher la clé de véhicule selon l'une quelconque des revendications 1 à 3 sont mises en œuvre.

6. Véhicule, comprenant un organe de commande qui comprend une mémoire (1020), un processeur (1010) et un programme d'ordinateur (1031) mémorisé dans la mémoire et pouvant s'exécuter sur le processeur, lorsque le processeur exécute le programme d'ordinateur, les étapes du procédé pour rechercher la clé de véhicule selon l'une quelconque des revendications 1 à 3 sont mises en œuvre.

7. Appareil électronique comprenant un processeur (1010), une mémoire (1020) et un programme (1031) ou des instructions mémorisés dans la mémoire et aptes à s'exécuter sur le processeur, lorsque le programme ou les instructions sont exécutés par le processeur, les étapes du procédé pour rechercher la clé de véhicule conformément à l'une quelconque des revendications 1 à 3 sont mises en œuvre.

8. Programme d'ordinateur (1031), comprenant un code lisible par ordinateur (1031'), lorsque le code lisible par ordinateur s'exécute sur un appareil de traitement informatique, le dispositif de traitement informatique est amené à exécuter les étapes du procédé pour rechercher la clé de véhicule selon l'une quelconque des revendications 1 à 3.
